# EUROPÄISCHE PATENTSCHRIFT

(11) **EP 3 350 007 B1**
(45) Veröffentlichungstag und Bekanntmachung des Hinweises auf die Patenterteilung: **13.11.2019**
(21) Anmeldenummer: 16750424.0
(22) Anmeldetag: 01.08.2016
(51) Int. Cl.: B60K 15/03, B60K 15/04, B60K 15/035, B60W 10/06

(54) **KRAFTFAHRZEUGTANK FÜR HYBRID-KRAFTFAHRZEUGE**
MOTOR VEHICLE FUEL TANK FOR HYBRID MOTOR VEHICLES
RÉSERVOIR DE VÉHICULE AUTOMOBILE POUR VÉHICULES AUTOMOBILES HYBRIDES

(30) Priorität: 15.09.2015 DE 102015217612
(43) Veröffentlichungstag der Anmeldung: 25.07.2018
(73) Patentinhaber: Kautex Textron GmbH & Co. KG, 53229 Bonn (DE)
(72) Erfinder: WOLF, Hartmut, 53639 Königswinter (DE); EULITZ, Dirk, 53115 Bonn (DE); OSSEGE, Theodor, 53619 Rheinbreitbach (DE); GEBERT, Klaus, 47877 Willich (DE)
(74) Vertreter: Richly & Ritschel Patentanwälte PartG mbB
(86) Internationale Anmeldenummer: PCT/EP2016/068331
(87) Internationale Veröffentlichungsnummer: WO 2017/045830

(56) Entgegenhaltungen:
- EP-A1- 1 785 389
- EP-A2- 1 253 410
- DE-A1-102004 003 178
- DE-A1-102009 028 369
- DE-U1- 20 114 800
- DE-U1-202014 006 179
- GB-A- 2 520 520
- US-A1- 2013 226 443

## Beschreibung

Die vorliegende Erfindung betrifft einen Kraftfahrzeugtank für ein Hybridkraftfahrzeug.

Hybrid-Kraftfahrzeuge und Plug-In-Hybrid-Kraftfahrzeuge (im Folgenden als PHEV abgekürzt; englische Abkürzung für plug-in hybrid electric vehicle) weisen einen Elektromotor und einen Verbrennungsmotor auf, wobei das Hybrid-Kraftfahrzeug durch den Elektromotor und/oder den Verbrennungsmotor angetrieben werden kann. Diese Hybrid-Kraftfahrzeuge und dort insbesondere PHEV können eine hohe rein elektrisch zurücklegbare Reichweite aufweisen. In Städten werden zunehmend sogenannte Umweltzonen eingerichtet, in denen ein Betrieb eins Kraftfahrzeugs (im Folgenden als Kfz abgekürzt) mit Verbrennungsmotor verboten ist. Daher werden große Strecken mit rein elektrischem Antrieb zurückgelegt, ohne dass der Verbrennungsmotor aktiviert und Kraftstoff verbrannt wird. Eine Batterie des PHEV wird bei Bedarf wieder geladen, so dass weiterhin rein elektrisch gefahren werden kann. Dies führt dazu, dass mitgeführter und nicht verbrauchter/verbrannter Kraftstoff im Kfz-Tank oft über Wochen und Monate altert.

Diese Alterung wiederum führt zu einer Erhöhung des Schadstoffausstoßes bei Verbrennung des gealterten Kraftstoffes. Weiterhin wird bei der Verbrennung von gealtertem Kraftstoff weniger Energie freigesetzt als bei frischem Kraftstoff, so dass der Kohlenstoffdioxidausstoß für eine vorgegebene Strecke weiter erhöht wird. Des Weiteren werden die Kaltstarteigenschaften eines Verbrennungsmotors durch gealterten Kraftstoff negativ beeinflusst. Ferner können durch den gealterten Kraftstoff Komponenten des Kraftfahrzeugbehälters angegriffen z.B. korrodiert werden, so dass die Langzeitfunktionalität des Kraftstoffbehälters beeinträchtigt werden kann. Ein weiterer Grund der Alterung von Kraftstoff in einem Hybrid-Kraftfahrzeug ist die Mitnahme von zu viel Kraftstoff im Kraftfahrzeugtank. Üblicherweise füllt ein Fahrer aus Sicherheitsgründen eines Hybrid-Kraftfahrzeugs den Kraftfahrzeugtank bei einem Betankungsvorgang komplett auf, so dass bei einer eventuell längeren Strecke, die nicht in Gänze mit dem Elektroantrieb des Hybrid-Kraftfahrzeugs zurücklegbar ist, die restliche Strecke mit dem Verbrennungsmotor zurückgelegt werden kann. Da die Laufzeiten des Elektromotors und des Verbrennungsmotors beim Zurücklegen einer zu fahrenden Strecke sehr von äußeren Gegebenheiten, so wie der Verkehrssituation, Wetter entlang der zu fahrenden Strecke, Höhenprofil der zu fahrenden Strecke, usw., abhängen, ist es für den Fahrer nur sehr schwer abschätzbar, wie viel Kraftstoff bei einem Tankvorgang in den Kraftfahrzeugtank einzufüllen ist. Folglich wird aus Sicherheitsgründen der Kraftfahrzeugtank bei einem Tankstopp häufig in Gänze gefüllt.

Als Konsequenz wird für eine Reise und/oder für den allgemeinen Gebrauch des Hybrid-Kraftfahrzeugs häufig zu viel Kraftstoff mitgeführt. Dies hat aufgrund von Beschleunigungen des Kfz zur Folge, dass der Kraftstoffverbrauch erhöht wird, da bei den Beschleunigungsvorgängen auch der unnötig mitgeführte Kraftstoff stets beschleunigt werden muss, was zu einer Erhöhung des Kohlenstoffdioxidausstoßes führt. Ferner altert der mitgeführte und nicht benötigte Kraftstoff.

Kraftfahrzeugtanks sind z.B. aus der DE 10 2009 028 369 A1, EP 1 785 389 A1 und DE 20 2014 006 179 U1 bekannt.

Der vorliegenden Erfindung liegt die Aufgabe zugrunde, einen verbesserten Kraftfahrzeugtank für Hybrid-Kraftfahrzeuge bereitzustellen, der zu einer Reduzierung des Ausstoßes von Kohlenstoffdioxid und Schadstoffen bei der Verbrennung des sich im Kraftfahrzeugtank befindlichen Kraftstoffs führt.

Die der vorliegenden Erfindung zugrunde liegende Aufgabe wird durch einen Kraftfahrzeugtank mit den Merkmalen des Anspruchs 1 gelöst. Vorteilhafte Ausgestaltungen sind in den abhängigen Ansprüchen beschrieben.

Im Genaueren wird die der vorliegenden Erfindung zugrunde liegende Aufgabe durch einen Kraftfahrzeugtank gelöst, der einen Kraftstoffqualitätssensor zum Bestimmen von zumindest einer Qualitätseigenschaft von sich im Kraftfahrzeugtank befindlichem Kraftstoff und eine Tanksteuereinrichtung umfasst. Dabei ist der Kraftstoffqualitätssensor mittels einer Signalleitung mit der Tanksteuereinrichtung zum Senden von die Qualitätseigenschaften des Kraftstoffs repräsentierenden Daten an die Tanksteuereinrichtung verbunden. Ferner ist die Tanksteuereinrichtung dazu ausgebildet, bei Ermittlung einer Qualitätseigenschaft des Kraftstoffs, die eine vorbestimmte Qualitätsgrenze unterschreitet und/oder überschreitet, über eine Datenausgabeeinheit ein Brennkraftmaschinenstartsignal auszugeben.

Der erfindungsgemäße Kraftfahrzeugtank bietet den Vorteil, dass bei Unterschreiten und/oder Überschreiten einer vorgegebenen Qualität des in den Kraftfahrzeugtank eingefüllten Kraftstoffs das Brennkraftmaschinenstartsignal ausgegeben wird, mittels dem eine Aktivierung einer Brennkraftmaschine des Kfz, in dem der erfindungsgemäße Kraftfahrzeugtank eingebaut ist, initiierbar ist. Das Brennkraftmaschinenstartsignal kann insbesondere an einen Bordcomputer / eine Steuerungselektronik des Kfz gesendet werden. Dabei kann seitens des Kfz, insbesondere unter Berücksichtigung von Daten aus einem Navigationssystem überprüft werden, ob ein Starten der Brennkraftmaschine an der Position des Kfz möglich/erlaubt ist. Beispielsweise können Navigationsdaten eines Bordcomputers oder eines Navigationssystems des Kfz herangezogen werden, in denen Umweltzonen hinterlegt sind, so dass seitens des Bordcomputers/des Navigationssystems des Kfz überprüft werden kann, ob sich das Kfz in einer Umweltzone befindet.

Durch Verbrennen des sich in dem Kraftfahrzeugtank befindlichen Kraftstoffs wird die Verweildauer des Kraftstoffs im Kraftfahrzeugtank reduziert, so dass einer Alterung des Kraftstoffs entgegengewirkt wird. Hierdurch kann gewährleistet werden, dass bei der Verbrennung des Kraftstoffs keine vermehrten Schadstoffe ausgestoßen werden.

Unter einer Qualitätseigenschaft des Kraftstoffs ist beispielsweise dessen Ethanolgehalt, dessen Oktanzahl, dessen Cetanzahl, dessen Wassergehalt, dessen Trübung, dessen Peroxidgehalt, usw. zu verstehen. Folglich ist der Kraftstoffqualitätssensor dazu ausgebildet, den Ethanolgehalt und/oder die Oktanzahl und/oder die Cetanzahl und/oder den Wassergehalt und/oder die Trübung und/oder den Peroxidgehalt des Kraftstoffs im Kraftfahrzeugtank zu bestimmen. In der Tanksteuereinrichtung sind Qualitätsgrenzwerte für den Ethanolgehalt und/oder die Oktanzahl und/oder die Cetanzahl und/oder den Wassergehalt und/oder die Trübung und/oder den Peroxidgehalt des Kraftstoffs in einem elektronischen Speicher hinterlegt. In der Tanksteuereinrichtung werden die von dem Kraftstoffqualitätssensor bereitgestellten und die oben angegebenen Qualitätseigenschaften repräsentierenden Daten mit den Qualitätsgrenzwerten verglichen, wobei bei Unterschreiten und/oder Überschreiten von zumindest einer Qualitätsgrenze durch eine der Qualitätseigenschaften des Kraftstoffs das Brennkraftmaschinenstartsignal mittels der Tanksteuereinrichtung ausgegeben wird.

Erfindungsgemäß ist die Tanksteuereinrichtung dazu ausgebildet, über eine Datenleitung / zweite Signalleitung von einer einen elektronischen Datenspeicher aufweisenden Elektronikeinheit Daten zu empfangen, die eine in den Kraftstofftank einzufüllenden Kraftstoffmenge repräsentieren. Ferner ist die Tanksteuereinrichtung dazu ausgebildet, einen Befüllvorgang durch Ausgabe eines Tanksignals über eine Datenausgabeeinheit zu initiieren. Weiterhin ist die Tanksteuereinrichtung dazu ausgebildet, über die Datenausgabeeinheit einen Befüllvorgang nach Erreichen der einzufüllenden Kraftstoffmenge durch Ausgabe eines Tankstoppsignals zu beenden.

Der elektronische Datenspeicher kann ein Teil einer fahrzeugseitigen Steuereinrichtung, zum Beispiel eines Bordcomputers sein. Ferner kann der elektronische Datenspeicher Teil einer Navigationseinrichtung sein, wobei die Navigationseinrichtung Teil eines Kraftfahrzeugs oder Teil eines mobilen Endgeräts sein kann. Der Datenspeicher kann auch ein Teil eines mobilen Endgeräts, zum Beispiel eines Smartphones oder eines Navigationsprogramms auf einem Smartphone sein. Weiterhin ist es auch möglich, dass der elektronische Datenspeicher Teil einer Computereinrichtung ist, mittels der eine sogenannte Datenwolke generiert wird, auf die beispielsweise ein Bordcomputer des Fahrzeugs oder ein mobiles Endgerät (beispielsweise in Form eines Smartphones) oder die Tanksteuereinrichtung direkt zugreifen kann. Begrenzungen hinsichtlich der Ausbildung der Elektronikeinheiten, die den elektronischen Datenspeicher umfassen, bestehen diesbezüglich nicht.

Die Ermittlung der einzufüllenden Kraftstoffmenge kann auf mannigfaltige Art und Weise erfolgen. So kann beispielsweise die einzufüllende Kraftstoffmenge aus der den elektronischen Datenspeicher aufweisenden Elektronikeinheit übertragen werden. Hierzu weist dann die den elektronischen Datenspeicher aufweisende Elektronikeinheit sämtliche notwendigen Informationen auf, um die einzufüllende Kraftstoffmenge zu berechnen (z. B. die Distanz zu einem Zielort und einen durchschnittlichen Kraftstoffverbrauch des Kfz). Ferner kann die einzufüllende Kraftstoffmenge auch dadurch ermittelt werden, dass von der den elektronischen Datenspeicher aufweisenden Elektronikeinheit die Distanz zum Zielort an die Tanksteuereinrichtung übertragen wird, wobei die Berechnung der einzufüllenden Kraftstoffmenge in der Tanksteuereinrichtung unter Berücksichtigung der zurückzulegenden Distanz erfolgt.

Beim Ermitteln der einzufüllenden Kraftstoffmenge kann beispielsweise eine Sollkraftstoffmenge in einem Bordcomputer des Kfz und/oder in einem mobilen Endgerät berechnet werden. Hierzu muss dann im Bordcomputer bzw. im mobilen Endgerät die Distanz zum Fahrtziel und beispielsweise der Durchschnittsverbrauch des Kfz, was eine verbrauchsrelevante Größe darstellt, hinterlegt/gespeichert sein.

Das Starten und/oder das Beenden des Befüllvorganges kann entweder von der Tanksteuereinrichtung und/oder von einer den elektronischen Datenspeicher aufweisenden Elektronikeinheit (zum Beispiel Smartphone) initiiert werden. Beispielsweise werden dazu dann entsprechend ein Tankstartsignal und/oder ein Tankstoppsignal an eine Befülleinrichtung (Zapfsäule, Zapfventil) und/oder an einen im Tank befindlichen elektrisch und/oder elektromagnetisch betätigbaren Aktuator ausgegeben. Unter einem elektrisch bzw. elektromagnetisch betätigbaren Aktuator ist im Sinne der vorliegenden Erfindung auch ein elektromechanisch betätigbarer Aktuator zu verstehen.

Vorzugsweise wird beim Ermitteln der in den Kraftfahrzeugtank einzufüllenden Kraftstoffmenge eine Distanz zu einem vorgegebenen Fahrtziel aus dem elektronischen Datenspeicher und zumindest eine verbrauchsrelevanten Größe aus dem elektronischen Datenspeicher ermittelt. Die Berechnung der einzufüllenden Kraftstoffmenge zur Erreichung des vorgegebenen Fahrtziels wird dann unter Verwendung der ermittelten Distanz und der ermittelten verbrauchsrelevanten Größe durchgeführt.

Die Ermittlung der Distanz bis zum Fahrtziel kann mittels der Tanksteuereinrichtung erfolgen. Die Berechnung der einzufüllenden Kraftstoffmenge zum Erreichen des vorgegebenen Fahrtziels kann beispielsweise in einem Bordcomputer des Kfz oder in einem mobilen Endgerät oder in einer eine Datenwolke bereitstellen Datenverarbeitungsanlage durchgeführt werden. Hierzu muss dann der Bordcomputer bzw. das mobile Endgerät bzw. die Datenverarbeitungsanlage die Distanz zum Fahrtziel und beispielsweise den Durchschnittsverbrauch des Kfz als verbrauchsrelevante Größe kennen.

Vorzugsweise ist die verbrauchsrelevante Größe ausgewählt aus Navigationsdaten und/oder einem Höhenprofil und/oder Streckenprofil einer zu fahrenden Strecke, und/oder einem durchschnittlichen Kraftstoffverbrauch des Kfz, und/oder einem Fahrverhaltensprofil des Fahrers, und/oder aus Kalendereinträgen in einem elektronischen Kalender des Fahrers, und/oder aus Wetterdaten, und/oder einem Temperaturprofil entlang einer zu fahrenden Strecke, und/oder aus Verkehrsinformationsdaten, und/oder aus Informationen über den Ladezustand einer zum Antrieb des Kraftfahrzeugs vorgesehenen Batterie (die auch als Traktionsbatterie bezeichnet wird), und/oder aus Kraftstoffpreisdaten von in der Umgebung und/oder der entlang der zu fahrenden Strecke befindlichen Tankstellen.

Zu den Navigationsdaten gehören die zurückzulegende Distanz und/oder die Streckencharakteristik, die sich aus dem prozentualen Anteil von Stadtfahrten, Landstraßenfahrten, Autobahnfahrten und dem Streckenprofil usw. zusammensetzt. Das Fahrverhaltensprofil wird auch als Fahrprofil des Fahrers bezeichnet und kann beispielsweise vom Bordcomputer des Kfz angelegt werden und berücksichtigt die Fahreigenschaften des Fahrers, z.B. sein Beschleunigungsverhalten (Stärke und Dauer der Beschleunigungen), sein Bremsverhalten (Stärke und Dauer der durchgeführten Bremsungen), die durchschnittliche Dauer bzw. Länge der Freilaufphasen (Schubbetrieb des Fahrzeugs), den prozentualen Anteil von Stadtfahrten und/oder Landstraßenfahrten und/oder Autobahnfahrten an der Gesamtfahrstrecke. All diese Profildaten schlagen sich selbstverständlich im durchschnittlichen Kraftstoffverbrauch nieder. Der elektronische Kalender des Fahrers, der Zieladressen, Terminzeiten und weitere Daten umfassen kann, kann z. B. in einem Bordcomputer und/oder in einem mobilen Endgerät (Smartphone) und/oder in einer Datenwolke gespeichert sein. Die Wetterdaten und/oder das Temperaturprofil entlang der zu fahrenden Strecke und/oder die Verkehrsinformationsdaten können auch beispielsweise im Bordcomputer und/oder in einem mobilen Endgerät und/oder in einer Datenwolke gespeichert sein. Auch die Kraftstoffpreisdaten von in der Umgebung und/oder entlang der geplanten Fahrstrecke befindlichen Tankstellen können beispielsweise im Bordcomputer und/oder in einem mobilen Endgerät und/oder in einer Datenwolke gespeichert sein. Dabei können die Kraftstoffpreisdaten von Tankstellen in einem Umkreis von vorzugsweise 1 km, weiter vorzugsweise 2 km, weiter vorzugsweise 5 km, weiter vorzugsweise 10 km und höchst vorzugsweise in einem Umkreis von 20 km von der momentanen Position des Kfz oder von der geplanten Fahrstrecke gespeichert sein. Mittels all dieser Daten kann die voraussichtlich in den nächsten Tagen bzw. in den nächsten Wochen notwendige Kraftstoffmenge bestimmt werden, wobei diese Bestimmung in dem Bordcomputer und/oder in einem mobilen Endgerät und/oder in einer entfernten elektronischen Datenverarbeitungseinrichtung erfolgen kann. Diese Bestimmung kann auch in der Tanksteuereinrichtung durchgeführt werden.

Erfindungsgemäß ist der Kraftfahrzeugtank derart ausgebildet, dass dieser zumindest einen elektrisch und/oder elektromagnetisch betätigbaren Aktuator umfasst, mittels dem ein Beenden eines Befüllvorganges des Kraftfahrzeugtanks initiierbar ist. Dabei ist die Tanksteuereinrichtung mit dem Aktuator über eine Datenaustauschverbindung verbunden und ferner dazu ausgebildet, an den Aktuator ein Befüllstoppsignal über die Datenaustauschverbindung zu übertragen. Bei Empfang des Befüllstoppsignals initiiert der Aktuator das Beenden des Befüllvorganges.

Das Befüllstoppsignal wird auch als Tankstoppsignal und das Befüllstartsignal wird auch als Tankstartsignal bezeichnet.

Ein entsprechend ausgebildeter Kraftfahrzeugtank bietet den Vorteil, dass dieser mit einer geeigneten Kraftstoffmenge befüllt wird, die beispielsweise zum Erreichen eines vorgegebenen Ziels notwendig ist, ohne dass seitens des Fahrers bzw. des Betankers des Kraftfahrzeugtanks Schätzungen hinsichtlich der einzufüllenden Kraftstoffmenge angestellt werden müssen. Somit kann gewährleistet werden, dass genügend Kraftstoff in das Kraftfahrzeug eingefüllt wird, um das vorgegebene Ziel zu erreichen. Jedoch wird nicht zu viel Kraftstoff in den Kraftfahrzeugtank eingeleitet, so dass nur die notwendige Kraftstoffmenge bei den jeweiligen Beschleunigungsvorgängen des Kraftfahrzeugs auch beschleunigt wird, wodurch der Kraftstoffverbrauch des Kraftfahrzeugs und somit auch dessen Kohlendioxidausstoß reduziert werden. Zusammenfassend erhöht der entsprechend ausgebildete Kraftfahrzeugtank den Tankkomfort, die Sicherheit des Erreichens eines vorgegebenen Ziels und verringert den Kohlenstoffdioxidausstoß eines Kfz und die Tendenz von Kraftstoffalterung.

Weiter vorzugsweise umfasst der Kraftfahrzeugtank einen Füllstandsensor, der mit der Tanksteuereinrichtung über eine zweite Datenaustauschverbindung verbunden ist, wobei der Füllstandsensor dazu ausgebildet ist, Daten, die einen mittels des Füllstandsensors ermittelten Füllstand des Kraftfahrzeugtanks repräsentieren, über die zweite Datenaustauschverbindung an die Tanksteuereinrichtung zu übertragen.

Ein entsprechend ausgebildeter Kraftfahrzeugtank bietet den Vorteil, dass dieser für unterschiedliche Ausführungen eines Fahrzeugs verwendet werden kann. So ist es seitens von Kraftfahrzeugherstellern häufig erwünscht, dass ein Kraftfahrzeugtank mit unterschiedlichen maximalen Befüllhöhen realisierbar ist. Hierzu ist es gemäß des Standes der Technik notwendig, unterschiedliche Betriebs- und/oder Betankungsentlüftungsventile vorzusehen, um unterschiedliche Abschalthöhen zu realisieren. Mittels des erfindungsgemäßen Kraftfahrzeugtanks ist eine entsprechende Bevorratung unterschiedlicher Betriebs- und/oder Betankungsentlüftungsventile nicht mehr notwendig, da eine maximale Befüllhöhe des Kraftfahrzeugtanks elektronisch einstellbar ist.

Vorzugsweise ist der Kraftfahrzeugtank derart ausgestaltet, dass dessen Tanksteuereinrichtung dazu ausgebildet ist, zusätzlich zu den von dem Füllstandsensor übertragenen Daten weitere eine Neigung des Kraftfahrzeugtanks repräsentierende Daten zu empfangen. Ferner ist die Tanksteuereinrichtung dazu ausgebildet, mittels der von dem Füllstandsensor übertragenen Daten und der die Neigung des Kraftfahrzeugtanks repräsentierenden Daten einen Ist-Füllstand zu ermitteln.

Der Ist-Füllstand entspricht dem Füllstand des Kraftfahrzeugtanks (also dem in nominalen Füllstand des Kraftfahrzeugtanks), wenn der Kraftfahrzeugtank keine Neigung aufweist, d.h. wenn das Kfz auf einer Ebene ohne Neigung positioniert ist. Der Zusammenhang zwischen dem Füllstandsensorsignal, den die Neigung des Kraftfahrzeugtanks repräsentierenden Daten und dem tatsächlichen Füllgrad des Kraftfahrzeugtanks (Ist-Füllstand) ist vorzugsweise in einem Korrekturkennfeld gespeichert, das vorzugsweise in der Tanksteuereinrichtung abgespeichert ist.

Die Messung der Raumlage des Kraftfahrzeugs bzw. des Kraftfahrzeugtanks erfolgt vorzugsweise mit einem fahrzeugeigenen Lagesensor. Zum Erzeugen des Korrekturkennfeldes kann der Tank beispielsweise um eine Horizontalachse in 5° Schritten geneigt und der Kraftfahrzeugtank in jeder Schräglage um die Vertikalachse und 360° in 5° Schritten rotiert werden. Dabei wird in jedem dieser Schräglagen- und Rotationspunkten eine Höhen-Volumen-Kennlinie erzeugt und in das Korrekturkennfeld eingetragen. Das Korrekturkennfeld dient dann zur Bestimmung der exakten im Kraftfahrzeugtank befindlichen Kraftstoffmenge. In dem Korrekturfeld können ferner Temperaturvariationen des Kraftstoffes berücksichtigt sein.

Ein entsprechend ausgebildeter Kraftfahrzeugtank bietet den Vorteil, dass der tatsächliche Befüllgrad des Kraftfahrzeugtanks nochmals mit erhöhter Genauigkeit bestimmbar ist, so dass eine erhöhte Sicherheit zum Erreichen eines vorgegebenen Ziels erreicht wird, wobei gleichzeitig gewährleistet wird, dass nicht zu viel Kraftstoff im Kraftfahrzeugtank mitgeführt wird, wodurch das Gewicht des Kraftfahrzeugs und damit dessen Kohlenstoffdioxidausstoß reduziert werden. Weiterhin wird einer Alterung des Kraftstoffs durch Mitnahme von lediglich der benötigten Kraftstoffmenge entgegengewirkt.

Der Kraftfahrzeugtank ist vorzugsweise derart ausgebildet, dass der zumindest eine Aktuator als Betriebs- und/oder Betankungsentlüftungsventil ausgebildet ist, das im Kraftfahrzeugtank angeordnet ist. Dabei ist das Betriebs- und/oder Betankungsentlüftungsventil elektrisch und/oder elektromagnetisch zwischen einer Offenstellung und einer Schließstellung betätigbar/verstellbar, wobei in der Offenstellung des Betriebs- und/oder Betankungsentlüftungsventils der Kraftfahrzeugtank mittels des Betriebs- und/oder Betankungsentlüftungsventils mit einer Entlüftungsleitung fluidverbunden ist, und wobei in der Schließstellung des Betriebs- und/oder Betankungsentlüftungsventils der Kraftfahrzeugtank von der Entlüftungsleitung mittels des Betriebs- und/oder Betankungsentlüftungsventils fluidgetrennt ist.

Die Verwendung des Betriebs- und/oder Betankungsentlüftungsventils zum Beenden eines Befüllvorganges bietet den Vorteil, dass sowieso für den Betrieb des Kraftfahrzeugtanks notwendige Ventileinrichtungen verwendet werden, um den Betankungsvorgang elektrisch und/oder elektromagnetisch zu beenden, so dass nicht weitere Bauteile im Kraftstofftank einzubauen sind, wodurch die Komplexität des entsprechend ausgebildeten Kraftfahrzeugtanks nicht erhöht wird.

Der Kraftfahrzeugtank ist vorzugsweise derart ausgebildet, dass der zumindest eine Aktuator als Rückschlagventil ausgebildet ist, das in einem in den Kraftfahrzeugtank mündenden Einfüllrohr angeordnet ist. Dabei ist das Rückschlagventil elektrisch und/oder elektromagnetisch zwischen einer Offenstellung und einer Schließstellung betätigbar/verstellbar, wobei in der Offenstellung des Rückschlagventils der Kraftfahrzeugtank mit dem Einfüllrohr fluidverbunden ist, und wobei in der Schließstellung des Rückschlagventils der Kraftfahrzeugtank von dem Einfüllrohr mittels des Rückschlagventils fluidgetrennt ist oder die lichte Weite des Einfüllrohrs mittels des Rückschlagventils reduziert ist.

Weiter vorzugsweise ist der Kraftfahrzeugtank derart ausgebildet, dass der zumindest eine Aktuator als Störkörper ausgebildet ist, der in einem in den Kraftfahrzeugtank mündenden Einfüllrohr angeordnet ist, wobei der Störkörper elektrisch und/oder elektromagnetisch zwischen einer Offenstellung und einer Störstellung betätigbar ist, wobei in der Störstellung des Störkörpers eine lichte Weite des Einfüllrohrs nicht reduziert ist, und wobei in der Störstellung des Störkörpers dieser in das Einfüllrohr hineinragt und die lichte Weite des Einfüllrohrs reduziert.

Weiter vorzugsweise ist der Kraftfahrzeugtank derart ausgebildet, dass der zumindest eine Aktuator als Elektromagnet ausgebildet ist, der in einem Einfüllstutzen eines in den Kraftfahrzeugtank mündenden Einfüllrohrs angeordnet ist, wobei der Elektromagnet zwischen einem Aktivzustand und einem Passivzustand betätigbar/verstellbar ist. Durch Aktivieren des Elektromagneten wird ein Schließen eines in das Einfüllrohr eingeführten Zapfventils bewirkt.

Die drei zuletzt beschriebenen Ausführungen des Kraftfahrzeugtanks bieten den Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner bietet die Tatsache, dass zum Beenden des Befüllvorganges kein Druck im Kraftfahrzeugtank aufgebaut werden muss, den Vorteil, dass die in den Kraftfahrzeugtank eingefüllte Kraftstoffmenge präziser der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

In einer weiteren bevorzugten Ausführungsform ist der Kraftfahrzeugtank derart ausgebildet, dass der zumindest eine Aktuator als Absperrventil ausgebildet ist, das zwischen dem Kraftfahrzeugtank und einem Aktivkohlefilter oder zwischen einem Aktivkohlefilter und der Atmosphäre angeordnet ist. Das Absperrventil ist elektrisch und/oder elektromagnetisch zwischen einer Offenstellung und einer Schließstellung betätigbar/verstellbar, wobei in der Offenstellung des Absperrventils der Kraftfahrzeugtank mittels des Absperrventils mit dem Aktivkohlefilter bzw. mit der Atmosphäre fluidverbunden ist, und wobei in der Schließstellung des Absperrventils der Kraftfahrzeugtank von dem Aktivkohlefilter bzw. von der Atmosphäre mittels des Absperrventils fluidgetrennt ist.

Vorzugsweise ist die Datenausgabeeinheit dazu ausgebildet, drahtlos Daten an eine Befüllvorrichtung zu übertragen, wobei die Daten eine in den Kraftfahrzeugtank einzufüllende Kraftstoffmenge repräsentieren.

Durch eine entsprechende Ausbildung des Kraftstofftanks kann der Aufbau des Kraftstofftanks erheblich vereinfacht werden, da der Befüllvorgang und insbesondere der Befüllstopp seitens der Befüllvorrichtung durchgeführt werden.

Ferner ist es vorzugsweise auch möglich, dass die Datenausgabeeinheit dazu ausgebildet ist, die Daten, die die in den Kraftstofftank einzufüllende Kraftstoffmenge repräsentieren, an eine Anzeige des Kfz und/oder an ein mobiles Endgerät zu übertragen, so dass der Fahrer/Betanker die einzufüllende Kraftstoffmenge manuell in den Kraftfahrzeugtank einfüllen kann.

Weiter vorzugsweise ist die Datenausgabeeinheit dazu ausgebildet ist, das Tanksignal und/oder das Tankstoppsignal drahtlos an die Befüllvorrichtung zu übertragen, so dass bei Empfang des Tanksignals die Befüllvorrichtung mit der Förderung von Kraftstoff in den Kraftfahrzeugtank startet, und so dass bei Empfang des Tankstoppsignals die Befüllvorrichtung die Förderung von Kraftstoff in den Kraftfahrzeugtank stoppt.

Die als drahtlose Datenaustauschverbindung ist beispielsweise über Nahfeldkommunikation (NFC, englisch: near field communication), Bluetooth, GSM (Global System for Mobile Communication) oder über eine andere drahtlose Datenverbindung realisiert.

Die beiden zuletzt beschriebenen Ausführungen des Kraftfahrzeugtanks bieten den Vorteil, dass nach Beenden des Befüllvorgangs der Kraftfahrzeugtank drucklos ist. Ferner kann die in den Kraftfahrzeugtank einzufüllende Kraftstoffmenge mit einer nochmals größeren Genauigkeit eingefüllt werden.

Unter einer elektrischen und/oder elektromagnetischen Verstellbarkeit eines Aktuators ist eine elektromechanische Verstellung des Aktuators zu verstehen.

Die Tanksteuerungseinrichtung kann als separate elektronische Einrichtung ausgebildet sein. Jedoch kann die Tanksteuerungseinrichtung auch als Teil eines Bordcomputersystems des Kraftfahrzeugs ausgebildet sein und eine Untereinheit des Bordcomputersystems darstellen.

Weitere Vorteile, Einzelheiten und Merkmale der Erfindung ergeben sich nachfolgend aus dem erläuterten Ausführungsbeispiel. Dabei zeigt im Einzelnen:

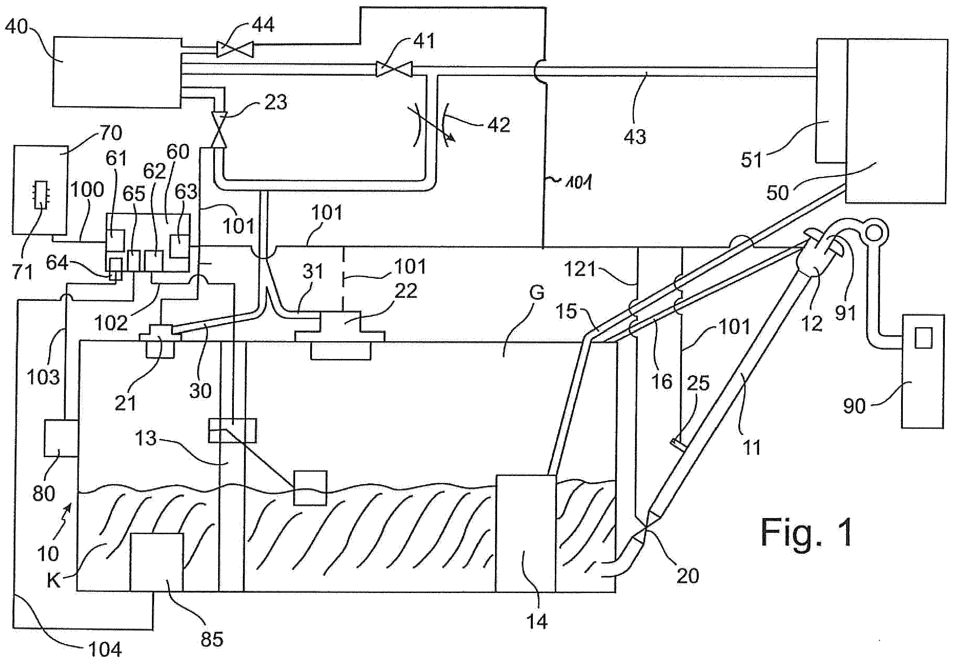

- Figur 1:: eine schematische Darstellung eines erfindungsgemäßen Kraftfahrzeugtanks für ein Hybrid-Kraftfahrzeug.

Figur 1 zeigt eine schematische Darstellung eines Kraftfahrzeugtanks 10 für ein Hybrid-Kraftfahrzeug. Der Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist. Weiterhin beherbergt der Kraftfahrzeugtank 10 eine Kraftstoffpumpe 14. Die Kraftstoffpumpe 14 ist über eine Kraftstoffleitung 15 mit einem Motor 50 eines in der Figur nicht dargestellten Kraftfahrzeugs zum Fördern des Kraftstoff K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einem Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Der Kraftfahrzeugtank 10 umfasst einen Kraftstoffqualitätssensor 85 zum Bestimmen von zumindest einer Qualitätseigenschaft von sich im Kraftfahrzeugtank 10 befindlichem Kraftstoff. Unter einer Qualitätseigenschaft des Kraftstoffs ist beispielsweise dessen Ethanolgehalt, dessen Oktanzahl, dessen Cetanzahl, dessen Wassergehalt, dessen Trübung, dessen Peroxidgehalt, usw. zu verstehen. Folglich ist der Kraftstoffqualitätssensor 85 dazu ausgebildet, den Ethanolgehalt und/oder die Oktanzahl und/oder die Cetanzahl und/oder den Wassergehalt und/oder die Trübung und/oder den Peroxidgehalt des Kraftstoffs im Kraftfahrzeugtank 10 zu bestimmen.

Der Kraftstoffqualitätssensor 85 ist mittels einer Signalleitung 104 mit der Tanksteuereinrichtung 60 zum Senden von die Qualitätseigenschaften des Kraftstoffs repräsentierende Daten an die Tanksteuereinrichtung 60 verbunden. Zu diesem Zweck weist die Tanksteuereinrichtung 60 eine Signalempfangseinheit 65 auf, die mit der Signalleitung 104 verbunden ist.

In der Tanksteuereinrichtung 60 sind Qualitätsgrenzwerte für den Ethanolgehalt und/oder die Oktanzahl und/oder die Cetanzahl und/oder den Wassergehalt und/oder die Trübung und/oder den Peroxidgehalt des Kraftstoffs in einem elektronischen Speicher hinterlegt. In der Tanksteuereinrichtung 60 werden die von dem Kraftstoffqualitätssensor bereitgestellten und die oben angegebenen Qualitätseigenschaften repräsentierenden Daten mit den Qualitätsgrenzwerten verglichen, wobei bei Unterschreiten und/oder Überschreiten von zumindest einer Qualitätsgrenze durch eine der Qualitätseigenschaften des Kraftstoffs das Brennkraftmaschinenstartsignal mittels der Tanksteuereinrichtung 60 ausgegeben wird.

Wenn die Tanksteuereinrichtung 60 ermittelt, dass zumindest eine Qualitätseigenschaft des Kraftstoffs eine vorbestimmte Qualitätsgrenze unterschreitet und/oder überschreitet, gibt die Tanksteuereinrichtung 60 über eine Datenausgabeeinheit ein Brennkraftmaschinenstartsignal aus.

Der erfindungsgemäße Kraftfahrzeugtank 10 bietet den Vorteil, dass bei Unterschreiten und/oder Überschreiten einer vorgegebenen Qualität des in den Kraftfahrzeugtank 10 eingefüllten Kraftstoffs das Brennkraftmaschinenstartsignal ausgegeben wird, mittels dem eine Aktivierung einer Brennkraftmaschine 50 des Kfz, das den Kraftfahrzeugtank 10 umfasst, initiierbar ist. Das Brennkraftmaschinenstartsignal kann insbesondere an einen Bordcomputer / eine Steuerungselektronik des Kfz gesendet werden. Dabei kann seitens des Kfz, insbesondere unter Berücksichtigung von Daten aus einem Navigationssystem überprüft werden, ob ein Starten der Brennkraftmaschine 50 an der Position des Kfz erlaubt ist. Beispielsweise können Navigationsdaten eines Bordcomputers oder eines Navigationssystems des Kfz herangezogen werden, in denen Umweltzonen hinterlegt sind, so dass seitens des Bordcomputers/des Navigationssystems des Kfz überprüft werden kann, ob sich das Kfz in einer Umweltzone befindet.

Durch Verbrennen des sich in dem Kraftfahrzeugtank 10 befindlichen Kraftstoffs wird die Verweildauer des Kraftstoffs im Kraftfahrzeugtank 10 reduziert, so dass einer Alterung des Kraftstoffs K entgegengewirkt wird. Hierdurch kann gewährleistet werden, dass bei der Verbrennung des Kraftstoffs K keine erhöhten Schadstoffe ausgestoßen werden.

Die Tanksteuereinrichtung 60 umfasst eine Datenempfangseinheit 61, über die elektronische Daten an die Tanksteuereinrichtung 60 übertragbar sind. Aus Figur 1 ist ersichtlich, dass die Datenempfangseinheit 61 über eine Datenleitung 100 mit einer Elektronikeinheit 70 verbunden ist, so dass eine Datenaustauschverbindung zwischen dem Tanksteuerungseinrichtung 60 und der Elektronikeinheit 70 ermöglicht ist. Die Elektronikeinheit 70 wiederum umfasst einen elektronischen Datenspeicher 71, so dass die in dem elektronischen Datenspeicher 71 gespeicherten Daten über die Datenleitung 100 an die Elektronikeinheit 60 übertragbar sind. Die Datenleitung 100 kann dabei dergestalt sein, dass Daten bidirektional zwischen der Elektronikeinheit 70 und der Tanksteuerungseinrichtung 60 übertragbar sind. Jedoch kann die Datenleitung 100 auch dergestalt sein, dass lediglich Daten von der Elektronikeinheit 70 hin zur Tanksteuereinrichtung 60 übertragbar sind. Die Elektronikeinheit 70 kann beispielsweise ein Bordcomputer 70 des den Kraftfahrzeugtank 10 aufweisenden Kfz sein. Weiterhin kann die Elektronikeinheit 70 aber auch ein mobiles Endgerät 70, beispielsweise ein Smartphone 70 sein. Darüber hinaus ist es auch möglich, dass es sich bei der Elektronikeinheit 70 um eine Datenverarbeitungsanlage 70 handelt, die zur Erzeugung und Bereitstellung einer Datenwolke ausgebildet ist.

Die Datenleitung 100 ermöglicht eine Übertragung von elektrischen Signalen zwischen der Elektronikeinheit 70 und der Tanksteuerungseinrichtung 60. Darüber hinaus ist es auch möglich, dass die Datenleitung 100 derart ausgestaltet ist, dass Daten zwischen der Elektronikeinheit 70 und der Tanksteuerungseinrichtung 60 drahtlos übertragen werden.

Ferner ist aus Figur 1 ersichtlich, dass die Tanksteuerungseinrichtung 60 eine Datenausgabeeinheit 63 umfasst, über die Daten und/oder Signale über eine erste Datenaustauschverbindung 101 an elektrisch und/oder elektromagnetisch betätigbaren Aktuatoren 20-25, 44 übertragbar sind. Die erste Datenaustauschverbindung 101 kann auch als erste Datenleitung 101 oder als erste Signalleitung 101 oder allgemein als erste elektrische Leitung 101 bezeichnet werden. Die weiter unten noch zu spezifizierenden Aktuatoren 20-25, 44 sind dazu ausgebildet, ein Beenden eines Befüllvorganges des Kraftfahrzeugtanks 10 zu initiieren. Hierzu ist die Tanksteuerungseinrichtung 60 dazu ausgebildet, an einen oder an mehrere der Aktuatoren 20-25, 44 ein Befüllstoppsignal über die Datenaustauschverbindung 101 zu übertragen, so dass bei Empfang des Befüllstoppsignals zumindest einer der Aktuatoren 20-25, 44 auf eine weiter unten zu spezifizieren der Art und Weise ein Beenden des Befüllvorganges initiiert.

In Figur 1 ist der Kraftfahrzeugtank 10 mit Aktuatoren 20-25, 44 dargestellt. Jedoch ist die vorliegende Erfindung nicht derart zu verstehen, dass sämtliche Aktoren Aktuatoren 20-25, 44 notwendig sind, um ein Beenden eines Befüllvorganges des Kraftfahrzeugtanks 10 zu initiieren. Vielmehr kann ein Beenden eines Befüllvorganges des Kraftfahrzeugtanks 10 durch lediglich einen einzigen elektrisch und/oder elektromagnetisch betätigbaren Aktuator 20-25, 44 initiiert werden. Folglich ist die vorliegende Erfindung derart zu verstehen, dass der erfindungsgemäße Kraftfahrzeugtank 10 lediglich auch einen einzigen elektrisch und/oder elektromagnetisch betätigbaren Aktuator 20-25, 44 aufweisen kann. Daher ist Figur 1 so zu verstehen, dass der Kraftfahrzeugtank 10 zumindest einen der elektrisch und/oder elektromagnetisch betätigbaren Aktuatoren 20-25, 44 aufweist. Jedoch kann der Kraftfahrzeugtank 10 auch mehrere der elektrisch und/oder elektromagnetisch betätigbaren Aktuatoren 20-25, 44 aufweisen.

Der Kraftfahrzeugtank 10 ist dazu ausgebildet, eine Datenaustauschverbindung zwischen der Tanksteuerungseinrichtung 60 und dem elektronischen Datenspeicher 71 der Elektronikeinheit 70 zu etablieren. Der Kraftfahrzeugtank 10 ist ferner dazu ausgebildet, eine in den Kraftfahrzeugtank 10 einzufüllende Kraftstoffmenge mittels über die Datenleitung 100 aus dem elektronischen Datenspeicher 71 übertragenen Daten zu ermitteln.

Das Etablieren der Datenaustauschverbindung und das Ermitteln der in den Kraftfahrzeugtank 10 einzufüllenden Kraftstoffmenge kann von der fahrzeugseitigen Tanksteuereinrichtung 60 und/oder auch von der Elektronikeinheit 70 durchgeführt werden. Die Ermittlung der einzufüllenden Kraftstoffmenge kann auf mannigfaltige Art und Weise erfolgen. So kann beispielsweise die einzufüllende Kraftstoffmenge aus der Elektronikeinheit 70 übertragen werden. Hierzu weist dann die Elektronikeinheit 70 sämtliche notwendigen Informationen auf, um die einzufüllende Kraftstoffmenge zu bestimmen/berechnen. Beispielsweise können in der Elektronikeinheit 70 die Distanz zu einem Zielort und ein durchschnittlicher Kraftstoffverbrauch des Kfz gespeichert sein, so dass aus diesen beiden Größen die einzufüllende Kraftstoffmenge zum Erreichen des Zielorts berechnet werden kann. Diese Berechnung der einzufüllenden Kraftstoffmenge kann aber auch in der Tanksteuereinrichtung 60 erfolgen. Hierzu müssen dann die notwendigen Daten an die Tanksteuereinrichtung 60 übertragen werden.

Beim Ermitteln der einzufüllenden Kraftstoffmenge muss eine Distanz zu einem vorgegebenen Fahrtziels aus dem elektronischen Datenspeicher 71 ermittelt werden. Ferner muss zumindest eine verbrauchsrelevante Größe aus dem elektronischen Datenspeicher 71 ermittelt werden. Das Berechnen der einzufüllenden Kraftstoffmenge zur Erreichung des vorgegebenen Fahrtziels wird dann unter Verwendung der ermittelten Distanz und der verbrauchsrelevanten Größe durchgeführt.

Die verbrauchsrelevante Größe kann beispielsweise ausgewählt werden aus Navigationsdaten und/oder einem Höhenprofil und/oder Streckenprofil einer zu fahrenden Strecke, und/oder einem durchschnittlichen Kraftstoffverbrauch des Kfz, und/oder einem Fahrverhalten des Fahrers, und/oder aus Kalendereinträgen in einem elektronischen Kalender des Fahrers, und/oder aus Wetterdaten und/oder einem Temperaturprofil entlang einer zu fahrenden Strecke, und/oder aus Verkehrsinformationsdaten, und/oder aus Informationen über einen Ladezustand einer zum Antrieb des Kraftfahrzeugs vorgesehenen Batterie, und/oder aus Kraftstoffpreisdaten von in der Umgebung und/oder der entlang der zu fahrenden Strecke befindlichen Tankstellen ausgewählt werden.

Ein lediglich beispielhaftes Szenario kann dergestalt sein, dass die Elektronikeinheit 70 Zugriff auf Kalendereinträge des Fahrers hat, wobei die Kalendereinträge sowohl Ort als auch Zeit von Terminen des Fahrers umfasst. Die Kalendereinträge können z.B. in einem Smartphone des Fahrers gespeichert sein. Unter Berücksichtigung dieser Kalendereinträge werden dann zu fahrende Strecken im Vorfeld berechnet, wobei bei den zu fahrenden Strecken zum Erreichen unterschiedlicher Zielorte Verkehrsinformationsdaten verwendet werden, um etwaige Umgehungsstrecken zum Umfahren eines Staus zu berücksichtigen. Ferner können Höhenprofile der zu fahrenden Strecken berücksichtigt werden, so dass ein Verbrauch unter Berücksichtigung der zu fahrenden Strecke und beispielsweise eines Höhenprofils im Voraus berechnet werden kann. Unter Berücksichtigung dieser Daten wird dann eine benötigte Kraftstoffmenge berechnet, die dann der Tanksteuereinrichtung 60 über die Datenleitung 100 übertragen wird.

Die vorliegende Erfindung ist jedoch nicht auf dieses Szenario beschränkt, sondern sämtliche oben aufgeführten verbrauchsrelevanten Größen können zur Bestimmung einer benötigten Kraftstoffmenge herangezogen werden und miteinander kombiniert werden.

Nachdem die in den Kraftfahrzeugtank 10 einzufüllende Kraftstoffmenge an die Tanksteuerungseinrichtung 60 übertragen wurde, wird ein Befüllstartsignal entweder von der Tanksteuerungseinrichtung 60 und/oder von der Elektronikeinheit 70 ausgegeben, wodurch ein Befüllvorgang des Kraftfahrzeugtanks 10 initiiert wird. Nachdem die in den Kraftfahrzeugtank 10 einzufüllende Kraftstoffmenge eingefüllt wurde, wird entweder von der Tanksteuerungseinrichtung 60 und/oder von der Elektronikeinheit 70 ein Befüllstoppsignal ausgegeben, wodurch ein Beenden des Befüllvorganges initiiert wird.

Der elektrisch und/oder elektromagnetisch betätigbare Aktuator 22 ist als Betankungsentlüftungsventil 22 ausgebildet sein, das im Kraftfahrzeugtank 10 angeordnet ist. Dabei ist das Betriebsentlüftungsventil 21 während der Betankung verschlossen. Bei Empfang eines Befüllstoppsignals, das von der Tanksteuereinrichtung 60 über die Datenausgabeeinheit 63 an das Betankungsentlüftungsventil 22 ausgegeben wird, schließt dieses Ventil, so dass ein Entlüften des Kraftfahrzeugtanks 10 während des Betankungsvorganges unterbunden wird. Durch weiteres Einleiten von Kraftstoff über das Einfüllrohr 11 in den Kraftfahrzeugtank 10 steigt der Tankinnendruck, so dass in das Einfüllrohr 11 eingeleiteter Kraftstoff in dem Einfüllrohr 11 ansteigt, bis der Kraftstoff eine Abschaltbohrung eines eingesetzten Zapfventils erreicht, wodurch der Befüllvorgang beendet wird.

Das Betankungsentlüftungsventil 22 ist elektrisch und/oder elektromagnetisch zwischen einer Offenstellung und einer Schließstellung betätigbar/verstellbar, wobei in dessen Offenstellung der Kraftfahrzeugtank 10 über das Betankungsentlüftungsventil 22 mit der Atmosphäre fluidverbunden ist, und wobei in der Schließstellung Betankungsentlüftungsventils 22 der Kraftfahrzeugtank 10 von der Atmosphäre fluidgetrennt ist.

In Figur 1 ist dargestellt, dass die Fluidverbindung des Kraftfahrzeugtanks 10 zur Atmosphäre über einen Aktivkohlefilter 40 und einen Auslassventil 41 bzw. ein Diagnoseventil 43 erfolgt, jedoch ist das Aktivkohlefilter 40 für die vorliegende Erfindung nicht obligatorisch sondern optional.

Der Kraftfahrzeugtank 10 weist ein Aktivkohlefilter 40 auf, das über ein Absperrventil 23 mit dem Betriebsentlüftungsventil 21 und dem Betankungsentlüftungsventil 22 und somit dem Kraftfahrzeugtank 10 fluidverbunden ist. Das Betriebsentlüftungsventil 21 und das Betankungsentlüftungsventil 22 müssen nicht notwendigerweise elektrisch und/oder elektromagnetisch betätigbar sein, sondern lediglich das Absperrventil 23 muss elektrisch und/oder elektromagnetisch betätigbar sein. Jedoch ist es selbstverständlich auch möglich, dass auch das Betriebsentlüftungsventil 21 und auch das Betankungsentlüftungsventil 22 neben dem Absperrventil 23 elektrisch und/oder elektromagnetisch betätigbar sind.

Das Absperrventil 23 ist zwischen dem Kraftfahrzeugtank 10 und dem Aktivkohlefilter 40 angeordnet und elektrisch und/oder elektromagnetisch zwischen einer Offenstellung und einer Schließstellung betätigbar/verstellbar, wobei in der Offenstellung des Absperrventils 23 der Kraftfahrzeugtank 10 mittels des Absperrventil 23 mit dem Aktivkohlefilter 40 fluidverbunden ist, und wobei in der Schließstellung des Absperrventils 23 der Kraftfahrzeugtank 10 von dem Aktivkohlefilter 40 mittels des Absperrventils 23 fluidgetrennt ist. Bei Empfang eines Befüllstoppsignals, dass von der Datenausgabeeinheit 63 der Tanksteuereinrichtung 60 an das Absperrventil 23 über die erste Datenaustauschverbindung 101 übertragen wird, schließt das Absperrventil 23, so dass eine Entlüftung des Kraftstoffbehälters 10 während des Betankungsvorganges unterbunden wird, so dass durch Einfüllen von Kraftstoff über das Einfüllrohr 11 in den Kraftfahrzeugtank 10 dessen Innendruck ansteigt. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

In einer weiteren Ausführungsform der vorliegenden Erfindung ist der Aktuator 20 als ein Rückschlagventil 20 ausgebildet, das in dem Einfüllrohr 11 angeordnet ist. Das Rückschlagventil 20 ist elektrisch und/oder elektromagnetisch zwischen einer Offenstellung und einer Schließstellung betätigbar, wobei in der Offenstellung des Rückschlagventils 20 der Kraftfahrzeugtank 10 mit dem Einfüllrohr 11 fluidverbunden ist, und wobei in der Schließstellung des Rückschlagventils 20 der Kraftfahrzeugtank 10 von dem Einfüllrohr 11 mittels des Rückschlagventils 20 fluidgetrennt ist oder zumindest die lichte Weite des Einfüllrohrs 11 mittels des Rückschlagventils 20 reduziert ist.

Bei Empfang eines Befüllstoppsignals, das von der Datenausgabeeinheit 63 der Tanksteuerungseinrichtung 60 über die erste Datenaustauschverbindung 101 an das Rückschlagventil 20 ausgegeben wird, wird das Rückschlagventil 20 in dessen Schließstellung überführt, woraufhin in das Einfüllrohr 11 eingeleiteter Kraftstoff nicht mehr oder lediglich verlangsamt in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung desl Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Gemäß einer weiteren Ausführungsform der vorliegenden Erfindung ist der zumindest eine elektrisch und/oder elektromagnetisch betätigbare Aktuator 25 als ein Störkörper 25 ausgebildet, der im Einfüllrohr 11 angeordnet ist. Der Störkörper 25 ist dabei zwischen einer Offenstellung und einer Störstellung elektrisch und/oder elektromagnetisch betätigbar/verstellbar, wobei in der Offenstellung des Störkörpers 25 die lichte Weite des Einfüllrohrs 11 nicht reduziert ist, und wobei in der Störstellung des Störkörpers 25 dieser in das Einfüllrohr 11 hineinragt und somit die lichte Weite des Einfüllrohrs 11 reduziert.

Bei Empfang eines Befüllstoppsignals, das von der Datenausgabeeinheit 63 der Tanksteuerungseinrichtung 60 über die erste Datenaustauschverbindung 101 an den Störkörper 25 ausgegeben wird, wird der Störkörper 25 in dessen Schließstellung überführt, woraufhin in das Einfüllrohr 11 eingeleiteter Kraftstoff nicht mehr oder mit einer verminderten Geschwindigkeit in den Kraftfahrzeugtank 10 eingeleitet werden kann, da mittels des Störkörpers Verwirbelung des eingefüllten Kraftstoffs bewirkt werden. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Aus Figur 1 ist ersichtlich, dass der Kraftfahrzeugtank 10 ferner einen Füllstandsensor 13 umfasst, der mit der Tanksteuereinrichtung 60 über eine zweite Datenaustauschverbindung 102 in Form einer Datenleitung 102 verbunden ist. Zur Übertragung der Daten von dem Füllstandsensor 13 an die Tanksteuereinrichtung 60 umfasst diese eine zweite Datenempfangseinheit 62. Der Füllstandsensor 13 ist dabei dazu ausgebildet, Daten, die einen mittels des Füllstandsensors 13 ermittelten Füllstand des Kraftfahrzeugtanks 10 repräsentieren, über die zweite Datenaustauschverbindung 102 an die Tanksteuereinrichtung 60 zu übertragen.

Somit kann die in den Kraftfahrzeugtank 10 eingefüllte Menge von Kraftstoff K in Echtzeit überprüft werden und durch die Tanksteuereinrichtung 60 bewertet werden, wobei nach Erreichen der einzufüllenden Kraftstoffmenge das Befüllstoppsignal an zumindest einen der Aktuatoren 20-25, 44 ausgegeben wird, woraufhin der Befüllvorgang beendet wird.

Aus Figur 1 ist ersichtlich, dass der Kraftfahrzeugtank 10 ferner einen Neigungssensor 80 zum Bestimmen einer Neigung des Kraftfahrzeugtanks 10 umfasst. Der Neigungssensor 80 ist dabei mit der Tanksteuereinrichtung 60 über eine dritte Datenaustauschverbindung 103 in Form einer dritten Datenleitung 103 verbunden, wobei die dritte Datenleitung 103 mit einer dritten Empfangseinheit 64 der Tanksteuereinrichtung 60 verbunden ist. Der Neigungssensor 80 ist dazu ausgebildet, über die von diesem ermittelte und die Neigung des Kraftfahrzeugtanks 10 repräsentierende Daten an die Tanksteuereinrichtung 60 zu übertragen.

Die Tanksteuereinrichtung 60 ist dabei dazu ausgebildet, zusätzlich zu den vom Füllstandsensor 13 übertragenen Daten die von dem Neigungssensor 80 übertragenen Daten zu empfangen und einen Ist-Füllstand des Kraftfahrzeugtanks 10 unter Berücksichtigung der Daten des Füllstandsensors 13 und des Neigungssensors 80 zu ermitteln. Somit wird die Bestimmung des Füllstandes des Kraftfahrzeugtanks 10 nochmals präziser ermöglicht, da eine Schrägstellung des Kraftfahrzeugs und somit des Kraftfahrzeugtanks 10 berücksichtigt werden kann.

Der Kraftfahrzeugtank 10 muss zur Berücksichtigung einer Raumlage bzw. Neigung des Kraftfahrzeugtanks 10 nicht notwendigerweise den Neigungssensor 80 aufweisen, da üblicherweise in der Bordelektronik eines Kraftfahrzeugs ein Neigungssensor vorhanden ist, dessen Daten in die dritte Datenempfangseinheit 64 der Tanksteuereinrichtung 60 übertragbar sind.

Bei dem in Figur 1 dargestellten Kraftfahrzeugtank 10 ist das Aktivkohlefilter 40 über ein Auslassventil 41 und eine Spülleitung 43 mit einem Ansaugtrakt 51 des Motors 50 fluidverbunden. Somit ist eine Spülung des Aktivkohlefilters 40 durch Ansaugluft des Motors 50 ermöglicht. Ferner ist aus Figur 1 ersichtlich, dass die Betriebsentlüftungsleitung 30 und die Betankungsentlüftungsleitung 31 über ein Drosselventil 42 mit dem Ansaugtrakt 51 des Motors 50 fluidverbunden sind. Somit ist es ermöglicht, unter Druck stehendes Gas aus dem Kraftstoffbehälter 10 direkt in den Ansaugtrakt 51 über das Drosselventil 42 und die Spülleitung 43 zu leiten, so dass das mit Kohlenwasserstoffen gesättigte Gas direkt zur Verbrennung innerhalb des Motors 50 verwendet werden kann.

Durch den erfindungsgemäßen Kraftfahrzeugtank 10 wird erreicht, dass der Kraftfahrzeugtank 10 mit einer geeigneten Kraftstoffmenge befüllt wird, die beispielsweise zum Erreichen eines vorgegebenen Ziels notwendig ist, ohne dass seitens des Fahrers bzw. des Betanker des Kraftfahrzeugtanks 10 Schätzungen hinsichtlich der einzufüllenden Kraftstoffmenge angestellt werden müssen. Somit kann gewährleistet werden, dass genügend Kraftstoff K in den Kraftfahrzeugtank 10 eingefüllt wird, um das vorgegebene Ziel bzw. um vorgegebene Ziele zu erreichen. Dabei werden unterschiedlichste verbrauchsrelevante Größen herangezogen, so dass die einzufüllende Kraftstoffmenge mit einer sehr hohen Genauigkeit bestimmt werden kann. Weiterhin bietet das erfindungsgemäße Verfahren und der erfindungsgemäße Kraftfahrzeugtank 10 den Vorteil, dass nicht zu viel Kraftstoff in den Kraftfahrzeugtank 10 eingeleitet wird, so dass zum einen eine Alterung des Kraftstoffs K innerhalb des Kraftfahrzeugtanks 10 vermindert wird, und darüber hinaus auch nicht benötigter Kraftstoff bei Beschleunigungsvorgängen des Kraftfahrzeugs mit beschleunigt werden muss, so dass dadurch der Verbrauch und somit der Kohlenstoffdioxidausstoß das Kraftfahrzeugzeugs reduziert werden.

### Bezugszeichenliste:

10 Kraftfahrzeugtank
11 Einfüllrohr (des Kraftfahrzeugtanks)
12 Einfüllstutzen
13 Füllstandsensor
14 Kraftstofffördereinrichtung / Kraftstoffpumpe
15 Kraftstoffleitung
16 Rezirkulationsleitung
20 Aktuator / Rückschlagventil
21 Aktuator / Betriebsentlüftungsventil
22 Aktuator / Betankungsentlüftungsventil
23 Aktuator / Absperrventil / FTIV
25 Aktuator / Störkörper (innerhalb des Einfüllstutzens)
30 Betriebsentlüftungsleitung
31 Betankungsentlüftungsleitung
40 Aktivkohlefilter
41 Auslassventil / Purge-Ventil
42 Drosselventil
43 Spülleitung
44 Diagnoseventil / OBD-Ventil
50 Motor
51 Ansaugtrakt (des Motors)
60 Tanksteuereinrichtung / Tanksteuerungseinrichtung (des Kraftfahrzeugtanks)
61 (erste) Datenempfangseinheit (der Tanksteuereinrichtung)
62 (zweite) Datenempfangseinheit (der Tanksteuereinrichtung)
63 Datenausgabeeinheit
64 (dritte) Datenempfangseinheit (de Tanksteuereinrichtung)
65 Signalempfangseinheit
70 Elektronikeinheit / Bordcomputer / mobiles Endgerät / Datenverarbeitungsanlage (zur Erzeugung und Bereitstellung einer Datenwolke)
71 elektronischer Datenspeicher (der Elektronikeinheit)
80 Neigungssensor
85 Kraftstoffqualitätssensor
90 Befüllvorrichtung / Zapfanlange
91 Zapfventil
100 Datenleitung (zwischen Elektronikeinheit und Tanksteuereinrichtung)
101 (erste) Datenaustauschverbindung / Datenleitung / Signalleitung / elektrische Leitung
102 (zweite) Datenaustauschverbindung / Datenleitung / Signalleitung / elektrische Leitung
103 (dritte) Datenaustauschverbindung / Datenleitung / Signalleitung / elektrische Leitung
104 Signalleitung
G Gasvolumen (im Kraftfahrzeugtank)
K Kraftstoff (im Kraftfahrzeugtank)

## Patentansprüche

1. Kraftfahrzeugtank (10) mit den folgenden Merkmalen:
- der Kraftfahrzeugtank (10) umfasst einen Kraftstoffqualitätssensor (85) zum Bestimmen von zumindest einer Qualitätseigenschaft von sich im Kraftfahrzeugtank (10) befindlichem Kraftstoff und eine Tanksteuereinrichtung (60) ;
- der Kraftstoffqualitätssensor (85) ist mittels einer Signalleitung (104) mit der Tanksteuereinrichtung (60) zum Senden von die Qualitätseigenschaften des Kraftstoffs repräsentierenden Daten an die Tanksteuereinrichtung (60) verbunden;
- die Tanksteuereinrichtung (60) ist dazu ausgebildet, bei Ermittlung einer Qualitätseigenschaft des Kraftstoffs, die eine vorbestimmte Qualitätsgrenze unterschreitet und/oder überschreitet, über eine Datenausgabeeinheit ein Brennkraftmaschinenstartsignal auszugeben,
wobei der Kraftfahrzeugtank (10) durch folgende Merkmale gekennzeichnet ist:
- die Tanksteuereinrichtung (60) ist dazu ausgebildet, über eine Datenleitung (100) von einer einen elektronischen Datenspeicher (71) aufweisenden Elektronikeinheit (70) Daten zu empfangen, die eine in den Kraftstofftank (10) einzufüllende Kraftstoffmenge repräsentieren;
- die Tanksteuereinrichtung (60) ist dazu ausgebildet, einen Befüllvorgang durch Ausgabe eine Tanksignals über eine Datenausgabeeinheit (63) zu initiieren;
- die Tanksteuereinrichtung (60) ist dazu ausgebildet, über die Datenausgabeeinheit (63) einen Befüllvorgang nach Erreichen der einzufüllenden Kraftstoffmenge durch Ausgabe eines Tankstoppsignals zu beenden;
- der Kraftfahrzeugtank (10) umfasst zumindest einen elektrisch und/oder elektromagnetisch betätigbaren Aktuator (20, 21, 22, 23, 24, 25, 44), mittels dem ein Beenden eines Befüllvorganges des Kraftfahrzeugtanks (10) initiierbar ist;
- die Tanksteuereinrichtung (60) ist mit dem Aktuator (20, 21, 22, 23, 24, 25, 44) über eine Datenaustauschverbindung (101) verbunden;
- die Tanksteuereinrichtung (60) ist dazu ausgebildet, an den Aktuator (20, 21, 22, 23, 24, 25, 44) ein Tankstoppsignal über die Datenaustauschverbindung (101) zu übertragen; und
- bei Empfang des Tankstoppsignals initiiert der Aktuator (20, 21, 22, 23, 24, 25, 44) das Beenden des Befüllvorganges.

2. Kraftfahrzeugtank (10) nach Anspruch 1, **gekennzeichnet durch** die folgenden Merkmale:
- der Kraftfahrzeugtank (10) umfasst einen Füllstandsensor (13) ;
- der Füllstandsensor (13) ist mit der Tanksteuereinrichtung (60) über eine zweite Datenaustauschverbindung (102) verbunden; und
- der Füllstandsensor (13) ist dazu ausgebildet, Daten, die einen mittels des Füllstandsensors (13) ermittelten Füllstand des Kraftfahrzeugtanks (10) repräsentierenden, über die zweite Datenaustauschverbindung (102) an die Tanksteuereinrichtung (60) zu übertragen.

3. Kraftfahrzeugtank (10) nach Anspruch 2, **gekennzeichnet durch** die folgenden Merkmale:
- die Tanksteuereinrichtung (60) ist dazu ausgebildet, zusätzlich zu den von dem Füllstandsensor (13) übertragenen Daten weitere eine Neigung des Kraftfahrzeugtanks (10) repräsentierende Daten zu empfangen; und
- die Tanksteuereinrichtung (60) ist dazu ausgebildet, mittels der von dem Füllstandsensor (13) übertragenen Daten und der die Neigung des Kraftfahrzeugtanks (10) repräsentierenden Daten einen Ist-Füllstand zu ermitteln.

4. Kraftfahrzeugtank (10) nach Anspruch 3, **gekennzeichnet durch** die folgenden Merkmale:
- der Kraftfahrzeugtank (10) umfasst einen Neigungssensor (80), mittels dem die Neigung des Kraftfahrzeugtanks (10) bestimmbar ist; und
- der Neigungssensor (80) ist mit der Tanksteuereinrichtung (60) über eine dritte Datenaustauschverbindung (103) verbunden, über die von dem Neigungssensor (80) ermittelte und die Neigung des Kraftfahrzeugtanks (10) repräsentierende Daten an die Tanksteuereinrichtung (60) übertragbar sind.

5. Kraftfahrzeugtank (10) nach einem der vorhergehenden Ansprüche, **gekennzeichnet durch** die folgenden Merkmale:
- der zumindest eine Aktuator (21, 22) ist als ein Betriebs- und/oder Betankungsentlüftungsventil (21, 22) ausgebildet, der im und/oder am Kraftfahrzeugtank (10) angeordnet ist;
- das Betriebs- und/oder Betankungsentlüftungsventil (21, 22) ist elektrisch und/oder elektromagnetisch zwischen einer Offenstellung und einer Schließstellung betätigbar;
- in der Offenstellung des Betriebs- und/oder Betankungsentlüftungsventils (21, 22) ist der Kraftfahrzeugtank (10) mittels des Betriebs- und/oder Betankungsentlüftungsventils (21, 22) mit einer Entlüftungsleitung (30, 31) fluidverbunden; und
- in der Schließstellung des Betriebs- und/oder Betankungsentlüftungsventils (21, 22) ist des Kraftfahrzeugtank (10) von der Entlüftungsleitung (30, 31) mittels des Betriebs- und/oder Betankungsentlüftungsventils (21, 22) fluidgetrennt.

6. Kraftfahrzeugtank (10) nach einem der vorhergehenden Ansprüche, **gekennzeichnet durch** die folgenden Merkmale:
- der zumindest eine Aktuator (20) ist als ein Rückschlagventil (20) ausgebildet, das in einem in den Kraftfahrzeugtank (10) mündenden Einfüllrohr (11) angeordnet ist;
- das Rückschlagventil (20) ist elektrisch und/oder elektromagnetisch zwischen einer Offenstellung und einer Schließstellung betätigbar;
- in der Offenstellung des Rückschlagventils (20) ist der Kraftfahrzeugtank (10) mit dem Einfüllrohr (11) fluidverbunden;
- in der Schließstellung des Rückschlagventils (20) ist der Kraftfahrzeugtank (10) von dem Einfüllrohr (11) mittels des Rückschlagventils (20) fluidgetrennt oder die lichte Weite des Einfüllrohrs (11) ist mittels des Rückschlagventils (20) reduziert.

7. Kraftfahrzeugtank (10) nach einem der vorhergehenden Ansprüche, **gekennzeichnet durch** die folgenden Merkmale:
- der zumindest eine Aktuator (25) ist als ein Störkörper (25) ausgebildet, der in einem in den Kraftfahrzeugtank (10) mündenden Einfüllrohr (11) angeordnet ist;
- der Störkörper (25) ist elektrisch und/oder elektromagnetisch zwischen einer Offenstellung und einer Störstellung betätigbar;
- in der Offenstellung des Störkörpers (25) ist eine lichte Weite des Einfüllrohres (11) nicht reduziert; und
- in der Störstellung des Störkörpers (25) ragt dieser in das Einfüllrohr (11) und reduziert die lichte Weite des Einfüllrohrs (11).

8. Kraftfahrzeugtank (10) nach einem der vorhergehenden Ansprüche, **gekennzeichnet durch** die folgenden Merkmale:
- der zumindest eine Aktuator (23) ist als Absperrventil (23) ausgebildet, das zwischen dem Kraftfahrzeugtank (10) und einem Aktivkohlefilter (40) angeordnet ist;
- das Absperrventil (23) ist elektrisch und/oder elektromagnetisch zwischen einer Offenstellung und einer Schließstellung betätigbar;
- in der Offenstellung des Absperrventils (23) ist der Kraftfahrzeugtank (10) mittels des Absperrventils (23) mit dem Aktivkohlefilter (40) fluidverbunden; und
- in der Schließstellung des Absperrventils (23) ist der Kraftfahrzeugtank (10) von dem Aktivkohlefilter (40) mittels des Absperrventils (23) fluidgetrennt.

9. Kraftfahrzeugtank (10) nach einem der vorhergehenden Ansprüche, **gekennzeichnet durch** die folgenden Merkmale:
- der zumindest eine Aktuator (24) ist als ein Elektromagnet (24) ausgebildet, der in einem Einfüllstutzen (12) eines in den Kraftfahrzeugtank (10) mündenden Einfüllrohrs (11) angeordnet ist;
- der Elektromagnet (24) ist zwischen einem Aktivzustand und einem Passivzustand betätigbar;
- im Aktivzustand erzeugt der Elektromagnet (24) ein Magnetfeld; und
- im Passivzustand erzeugt der Elektromagnet (24) kein Magnetfeld.

10. Kraftfahrzeugtank (10) nach einem der vorhergehenden Ansprüche, **dadurch gekennzeichnet, dass** die Datenausgabeeinheit (63) dazu ausgebildet ist, drahtlos Daten an eine Befüllvorrichtung (90) zu übertragen, die eine in den Kraftfahrzeugtank (10) einzufüllende Kraftstoffmenge repräsentieren.

11. Kraftfahrzeugtank (10) nach einem der vorhergehenden Ansprüche, **dadurch gekennzeichnet, dass** die Datenausgabeeinheit (63) dazu ausgebildet ist, das Tanksignal und/oder das Tankstoppsignal drahtlos an die Befüllvorrichtung (90) zu übertragen, so dass bei Empfang des Tanksignals die Befüllvorrichtung (90) mit der Förderung von Kraftstoff in den Kraftfahrzeugtank (10) startet, und so dass bei Empfang des Tankstoppsignals die Befüllvorrichtung (90) die Förderung von Kraftstoff in den Kraftfahrzeugtank (10) stoppt.

## Claims

1. A motor vehicle tank (10) having the following features:
- the motor vehicle tank (10) includes a fuel quality sensor (85) for determining at least one quality property of fuel that is present in the motor vehicle tank (10), and a tank control device (60);
- the fuel quality sensor (85) is connected by means of a signal line (104) to the tank control device (60) for transmitting data, representing the quality properties of the fuel, to the tank control device (60);
- the tank control device (60) is designed, upon determination of a quality property of the fuel that falls below and/or exceeds a predetermined quality limit, to output an internal combustion engine start signal via a data output unit,
wherein the motor vehicle tank (10) is **characterized by** the following features:
- the tank control device (60) is designed to receive data, representing a quantity of fuel to be filled into the fuel tank (10), from an electronics unit (70) having an electronic data memory (71), via a data line (100);
- the tank control device (60) is designed to initiate a filling operation by outputting a tank signal via a data output unit (63) ;
- the tank control device (60) is designed to terminate a filling operation after the quantity of fuel to be filled is reached, by outputting a tank stop signal via the data output unit (63);
- the motor vehicle tank (10) includes at least one electrically and/or electromagnetically actuatable actuator (20, 21, 22, 23, 24, 25, 44) by means of which termination of a filling operation of the motor vehicle tank (10) may be initiated;
- the tank control device (60) is connected to the actuator (20, 21, 22, 23, 24, 25, 44) via a data exchange connection (101) ;
- the tank control device (60) is designed to transmit a tank stop signal to the actuator (20, 21, 22, 23, 24, 25, 44) via the data exchange connection (101); and
- upon receipt of the tank stop signal, the actuator (20, 21, 22, 23, 24, 25, 44) initiates the termination of the filling operation.

2. The motor vehicle tank (10) according to Claim 1, **characterized by** the following features:
- the motor vehicle tank (10) includes a filling level sensor (13) ;
- the filling level sensor (13) is connected to the tank control device (60) via a second data exchange connection (102); and
- the filling level sensor (13) is designed to transmit data, representing a filling level of the motor vehicle tank (10) determined by means of the filling level sensor (13), to the tank control device (60) via the second data exchange connection (102).

3. The motor vehicle tank (10) according to Claim 2, **characterized by** the following features:
- the tank control device (60) is designed to receive, in addition to the data transmitted by the filling level sensor (13), data representing an inclination of the motor vehicle tank (10); and
- the tank control device (60) is designed to determine an actual filling level by means of the data transmitted by the filling level sensor (13), and the data representing the inclination of the motor vehicle tank (10).

4. The motor vehicle tank (10) according to Claim 3, **characterized by** the following features:
- the motor vehicle tank (10) includes an inclination sensor (80) by means of which the inclination of the motor vehicle tank (10) may be determined; and
- the inclination sensor (80) is connected to the tank control device (60) via a third data exchange connection (103), via which data representing the inclination of the motor vehicle tank (10), determined by the inclination sensor (80), are transmittable to the tank control device (60).

5. The motor vehicle tank (10) according to one of the preceding claims, **characterized by** the following features:
- the at least one actuator (21, 22) is designed as an operational and/or refueling vent valve (21, 22) that is situated in and/or on the motor vehicle tank (10);
- the operational and/or refueling vent valve (21, 22) is electrically and/or electromagnetically actuatable between an open position and a closed position;
- in the open position of the operational and/or refueling vent valve (21, 22), the motor vehicle tank (10) is fluidically connected to a vent line (30, 31) by means of the operational and/or refueling vent valve (21, 22); and
- in the closed position of the operational and/or refueling vent valve (21, 22), the motor vehicle tank (10) is fluidically separated from the vent line (30, 31) by means of the operational and/or refueling vent valve (21, 22).

6. The motor vehicle tank (10) according to one of the preceding claims, **characterized by** the following features:
- the at least one actuator (20) is designed as a check valve (20) that is situated in a filling tube (11) that opens into the motor vehicle tank (10);
- the check valve (20) is electrically and/or electromagnetically actuatable between an open position and a closed position;
- in the open position of the check valve (20), the motor vehicle tank (10) is fluidically connected to the filling tube (11);
- in the closed position of the check valve (20), the motor vehicle tank (10) is fluidically separated from the filling tube (11) by means of the check valve (20), or the clearance width of the filling tube (11) is reduced by means of the check valve (20).

7. The motor vehicle tank (10) according to one of the preceding claims, **characterized by** the following features:
- the at least one actuator (25) is designed as an obstruction body (25) that is situated in a filling tube (11) that opens into the motor vehicle tank (10);
- the obstruction body (25) is electrically and/or electromagnetically actuatable between an open position and an obstruction position;
- in the open position of the obstruction body (25), a clearance width of the filling tube (11) is not reduced; and
- in the obstruction position of the obstruction body (25), the obstruction body protrudes into the filling tube (11) and reduces the clearance width of the filling tube (11).

8. The motor vehicle tank (10) according to one of the preceding claims, **characterized by** the following features:
- the at least one actuator (23) is designed as a shutoff valve (23) that is situated between the motor vehicle tank (10) and an activated carbon filter (40);
- the shutoff valve (23) is electrically and/or electromagnetically actuatable between an open position and a closed position;
- in the open position of the shutoff valve (23), the motor vehicle tank (10) is fluidically connected to the activated carbon filter (40) by means of the shutoff valve (23); and
- in the closed position of the shutoff valve (23), the motor vehicle tank (10) is fluidically separated from the activated carbon filter (40) by means of the shutoff valve (23).

9. The motor vehicle tank (10) according to one of the preceding claims, **characterized by** the following features:
- the at least one actuator (24) is designed as an electromagnet (24) that is situated in a filling neck (12) of a filling tube (11) that opens into the motor vehicle tank (10);
- the electromagnet (24) is actuatable between an active state and a passive state;
- in the active state the electromagnet (24) generates a magnetic field; and
- in the passive state the electromagnet (24) generates no magnetic field.

10. The motor vehicle tank (10) according to one of the preceding claims, **characterized in that** the data output unit (63) is designed to wirelessly transmit data, representing a quantity of fuel to be filled into the motor vehicle tank (10), to a filling device (90).

11. The motor vehicle tank (10) according to one of the preceding claims, **characterized in that** the data output unit (63) is designed to wirelessly transmit the tank signal and/or the tank stop signal to the filling device (90), so that upon receipt of the tank signal the filling device (90) starts the conveying of fuel into the motor vehicle tank (10), and upon receipt of the tank stop signal the filling device (90) stops the conveying of fuel into the motor vehicle tank (10).

## Revendications

1. Réservoir de véhicule automobile (10) présentant les particularités suivantes :
- le réservoir de véhicule automobile (10) comprend un capteur de qualité de carburant (85) pour déterminer au moins une propriété de qualité d'un carburant se trouvant dans le réservoir de véhicule automobile (10) et un dispositif de commande de réservoir (60) ;
- le capteur de qualité de carburant (85) est relié au moyen d'une ligne de signal (104) au dispositif de commande de réservoir (60) pour envoyer au dispositif de commande de réservoir (60) des données représentant les propriétés de qualité du carburant ;
- le dispositif de commande de réservoir (60) est réalisé, lorsqu'une propriété de qualité du carburant qui est inférieure et/ou supérieure à une limite de qualité prédéterminée est détectée, pour délivrer par l'intermédiaire d'une unité de sortie de données un signal de démarrage de moteur à combustion interne,
le réservoir de véhicule automobile (10) étant **caractérisé par** les particularités suivantes :
- le dispositif de commande de réservoir (60) est réalisé pour recevoir sur une ligne de données (100) des données d'une unité électronique (70) présentant une mémoire de données électronique (71), lesdites données représentant une quantité de carburant à verser dans le réservoir de carburant (10) ;
- le dispositif de commande de réservoir (60) est réalisé pour déclencher une opération de remplissage en délivrant un signal de ravitaillement en carburant par l'intermédiaire d'une unité de sortie de données (63) ;
- le dispositif de commande de réservoir (60) est réalisé pour arrêter par l'intermédiaire de l'unité de sortie de données (63) une opération de remplissage, après que la quantité de carburant à verser a été atteinte, en délivrant un signal d'arrêt de ravitaillement en carburant ;
- le réservoir de véhicule automobile (10) comprend au moins un actionneur à commande électrique et/ou électromagnétique (20, 21, 22, 23, 24, 25, 44) permettant de déclencher l'arrêt d'une opération de remplissage du réservoir de véhicule automobiles (10) ;
- le dispositif de commande de réservoir (60) est relié à l'actionneur (20, 21, 22, 23, 24, 25, 44) par une liaison d'échange de données (101) ;
- le dispositif de commande de réservoir (60) est réalisé pour transmettre à l'actionneur (20, 21, 22, 23, 24, 25, 44) un signal d'arrêt de ravitaillement en carburant sur la liaison d'échange de données (101) ; et
- à réception du signal d'arrêt de ravitaillement en carburant, l'actionneur (20, 21, 22, 23, 24, 25, 44) déclenche l'arrêt de l'opération de remplissage.

2. Réservoir de véhicule automobile (10) selon la revendication 1, **caractérisé par** les particularités suivantes :
- le réservoir de véhicule automobile (10) comprend un capteur de niveau (13) ;
- le capteur de niveau (13) est relié au dispositif de commande de réservoir (60) par l'intermédiaire d'une deuxième liaison d'échange de données (102) ; et
- le capteur de niveau (13) est réalisé pour transmettre au dispositif de commande de réservoir (60) des données représentant un niveau du réservoir de véhicule automobile (10), détecté au moyen du capteur de niveau (13), sur la deuxième liaison d'échange de données (102).

3. Réservoir de véhicule automobile (10) selon la revendication 2, **caractérisé par** les particularités suivantes :
- le dispositif de commande de réservoir (60) est réalisé pour recevoir, en plus des données transmises par le capteur de niveau (13), d'autres données représentant une inclinaison du réservoir de véhicule automobile (10) ; et
- le dispositif de commande de réservoir (60) est réalisé pour détecter un niveau de remplissage réel au moyen des données transmises par le capteur de niveau (13) et des données représentant l'inclinaison du réservoir de véhicule automobile (10).

4. Réservoir de véhicule automobile (10) selon la revendication 3, **caractérisé par** les particularités suivantes :
- le réservoir de véhicule automobile (10) comprend un capteur d'inclinaison (80) permettant de déterminer l'inclinaison du réservoir de véhicule automobile (10) ; et
- le capteur d'inclinaison (80) est relié au dispositif de commande de réservoir (60) par une troisième liaison d'échange de données (103) sur laquelle des données détectées par le capteur d'inclinaison (80) et représentant l'inclinaison du réservoir de véhicule automobile (10) peuvent être transmises au dispositif de commande de réservoir (60).

5. Réservoir de véhicule automobile (10) selon l'une quelconque des revendications précédentes, **caractérisé par** les particularités suivantes:
- ledit au moins un actionneur (21, 22) est réalisé sous la forme d'une soupape de service et/ou de purge de ravitaillement en carburant (21, 22) disposée dans et/ou sur le réservoir de véhicule automobile (10) ;
- la soupape de service et/ou de purge de ravitaillement en carburant (21, 22) peut être actionnée de manière électrique et/ou électromagnétique entre une position ouverte et une position fermée ;
- dans la position ouverte de la soupape de service et/ou de ravitaillement (21, 22), le réservoir de véhicule automobile (10) est connecté de manière fluidique à une conduite de purge (30, 31) au moyen de la soupape de service et/ou de purge de ravitaillement en carburant (21, 22) ; et
- dans la position fermée de la soupape de service et/ou de purge de ravitaillement en carburant (21, 22), le réservoir de véhicule automobile (10) est isolé de manière fluidique de la conduite de purge (30, 31) au moyen de la soupape de service et/ou de purge de ravitaillement en carburant (21, 22).

6. Réservoir de véhicule automobile (10) selon l'une quelconque des revendications précédentes, **caractérisé par** les particularités suivantes :
- ledit au moins un actionneur (20) est réalisé sous la forme d'une soupape de retenue (20) disposée dans un tuyau de remplissage (11) débouchant sur le réservoir de véhicule automobile (10) ;
- la soupape de retenue (20) peut être actionnée de manière électrique et/ou électromagnétique entre une position ouverte et une position fermée ;
- dans la position ouverte de la soupape de retenue (20), le réservoir de véhicule automobile (10) est connecté de manière fluidique au tuyau de remplissage (11) ;
- dans la position fermée de la soupape de retenue (20), le réservoir de véhicule automobile (10) est isolé de manière fluidique du tuyau de remplissage (11) au moyen de la soupape de retenue (20) ou bien la largeur libre du tuyau de remplissage (11) est réduite au moyen de la soupape de retenue (20) .

7. Réservoir de véhicule automobile (10) selon l'une quelconque des revendications précédentes, **caractérisé par** les particularités suivantes :
- ledit au moins un actionneur (25) est réalisé sous la forme d'un corps perturbateur (25) disposé dans un tuyau de remplissage (11) débouchant sur le réservoir de véhicule automobile (10) ;
- le corps perturbateur (25) peut être actionné de manière électrique et/ou électromagnétique entre une position ouverte et une position de perturbation ;
- dans la position ouverte du corps perturbateur (25), une largeur libre du tuyau de remplissage (11) n'est pas réduite ; et
- dans la position de perturbation du corps perturbateur (25), celui-ci fait saillie dans le tuyau de remplissage (11) et réduit la largeur libre du tuyau de remplissage (11).

8. Réservoir de véhicule automobile (10) selon l'une quelconque des revendications précédentes, **caractérisé par** les particularités suivantes :
- ledit au moins un actionneur (23) est réalisé sous la forme d'une soupape d'arrêt (23) disposée entre le réservoir de véhicule automobile (10) et un filtre au charbon actif (40) ;
- la soupape d'arrêt (23) peut être actionnée de manière électrique et/ou électromagnétique entre une position ouverte et une position fermée ;
- dans la position ouverte de la soupape d'arrêt (23), le réservoir de véhicule automobile (10) est connecté de manière fluidique au filtre au charbon actif au moyen de la soupape d'arrêt (23) ; et
- dans la position fermée de la soupape d'arrêt (23), le réservoir de véhicule automobile (10) est isolé de manière fluidique du filtre au charbon actif (40) au moyen de la soupape d'arrêt (23).

9. Réservoir de véhicule automobile (10) selon l'une quelconque des revendications précédentes, **caractérisé par** les particularités suivantes :
- ledit au moins un actionneur (24) est réalisé sous la forme d'un électroaimant (24) disposé dans une tubulure de remplissage (12) d'un tuyau de remplissage (11) débouchant sur le réservoir de véhicule automobile (10) ;
- l'électroaimant (24) peut être actionné entre un état actif et un état passif ;
- à l'état actif, l'électroaimant (24) produit un champ magnétique ; et
- à l'état passif, l'électroaimant (24) ne produit pas de champ magnétique.

10. Réservoir de véhicule automobile (10) selon l'une quelconque des revendications précédentes, **caractérisé en ce que** l'unité de sortie de données (63) est réalisée pour transmettre sans fil à un dispositif de remplissage (90) des données représentant la quantité de carburant à verser dans le réservoir de véhicule automobile (10).

11. Réservoir de véhicule automobile (10) selon l'une quelconque des revendications précédentes, **caractérisé en ce que** l'unité de sortie de données (63) est réalisée pour transmettre sans fil le signal de ravitaillement en carburant et/ou le signal d'arrêt de ravitaillement en carburant au dispositif de remplissage (90) de sorte qu'à réception du signal de ravitaillement en carburant, le dispositif de remplissage (90) commence à débiter du carburant dans le réservoir de véhicule automobile (10) et de sorte qu'à réception du signal d'arrêt de ravitaillement en carburant, le dispositif de remplissage (90) arrête de débiter du carburant dans le réservoir de véhicule automobile (10).
